# EUROPÄISCHE PATENTANMELDUNG

(11) **EP 2 523 168 A1**
(43) Veröffentlichungstag der Anmeldung: **14.11.2012**
(21) Anmeldenummer: 12000344.7
(22) Anmeldetag: 20.01.2012
(51) Int. Cl.: G07B 15/02, G07C 9/00

(54) **Elektronisches-Code-Schloss mit Zahlencode-Übermittlung per GMS / UMTS Signal via verschlüsselter SMS-Datenübertragung für die zeitweise Nutzung von Wirtschaftsgütern**

(30) Priorität: 12.05.2011 DE 202011100624 U; 08.09.2011 DE 202011105445 U
(71) Anmelder: Unrau, Herbert, 07183 Calvia, Costa de la Calma (ES)
(72) Erfinder: Unrau, Herbert, 07183 Calvia, Costa de la Calma (ES)

(57) **Zusammenfassung**

Ein durch ein GMS/UMTS Signal via verschlüsselter SMS Datenübertragung fern steuerbares Code-Schloss-System an einem Fahrrad oder Pedelec, das ein zeitlich begrenzten Benutzer-Code empfangen kann, mit dem der Mieter (Benutzer) das Code-Schloss öffnen und das Fahrrad oder Pedelec benutzen kann. Buchen kann der Mieter (Benutzer) im Internet oder telefonisch.

## Beschreibung

### Bezeichnung der Erfindung:

Elektronisches-Code-Schloss mit Zahlencode-Übermittlung per GMS / UMTS Signal via verschlüsselter SMS Datenübertragung für die zeitweise Nutzung von Wirtschaftsgütern (z.B. Fahrräder, Pedelecs, usw.), die durch das Code-Schloss gesichert sind.

Durch eine Buchung über das Internet oder per Telefon kann der Nutzer mit dem ihm und gleichzeitig dem Code-Schloss übermittelten Zahlencode das Code-Schloss öffnen und das Wirtschaftsgut nutzen.

Definition der Erfindung: - ein Code-Schloss - an einem Fahrrad, E-Bike, Pedelec, oder einem anderen Wirtschaftsgut
- das über eine Elektronik-Platine (Steuereinheit) verfügt, die ein GSM / UMTS Signal via verschlüsselter SMS Datenübertragung gesendeten Code verarbeiten kann. Dieser Code wird nach Buchung eines Mieters über ein Internet-Web-Portal mit integriertem Computer-Software-Management-Programm, automatisch an das Code-Schoss gesendet und dem Mieter mitgeteilt.

Fahrräder, Pedelecs oder andere Wirtschaftsgüter können für einen zeitliche gesteuerten Gebrauch so an einen Mieter (Benutzer) freigeben werden.

### Technik der Elektronik und Mechanik:

- Anwendung:: Elektronisches gesteuertes Code-Schloss mit Zahlencodeübermittlung per GSM / UMTS Signal via verschlüsselter SMS Datenübertragung für die zeitweise Nutzung von Wirtschaftsgütern nach einer Buchung über ein Internet-Portal oder per Telefon.
GSM / UMTS Daten empfangen: Die Elektronik-Platine im Code-Schloss empfängt von einem zentralen Computer-Software-Management-Programm nach einer zeitlichen definierten Buchung über ein Internet-Portal ein Benutzer-Zahlencode durch GSM / UMTS Signal via verschlüsselter SMS Datenübertragung. Mit der Codeeingabe an der Tastenfeldeinheit am Code-Schloss schaltet die Elektronik-Platine für ca. 10 Sekunden Strom an einen Hubmagneten und öffnet das Code-Schloss und das Wirtschaftsgut kann benutzt werden.
GSM/UMTS Daten senden: Die Elektronik-Platine im Code-Schloss empfängt von Computer-Software-Management-Programm nach dem Ende der zeitlich begrenzten Buchung des Benutzers, einen Service-Code. Wenn das Wirtschaftsgut dabei an einer korrekten Station angeschlossen ist, sendet die Elektronik-Platine im Code-Schloss ein Rücksignal mit den korrekten GPS-Stations-Daten an das Computer-Software-Management-Programm. Jetzt ist der zeitlich begrenzte Gebrauch ordnungsgemäß abgeschlossen und das Wirtschaftsgut gilt als vom Nutzer zurückgegeben.
Wenn die Elektronik-Platine im Code-Schloss einen Service-Code empfangen hat und nicht an der korrekten Station angeschlossen ist, wird ein Verlustsignal von der Elektronik-Platine im Code-Schoss an das Computer-Software-Management-Programm gesendet. Das Tracking System auf der Elektronik-Platine wird aktiviert und der Mieter kann benachrichtigt werden, oder das Wirtschaftsgut kann gesucht werden.
Jedes, von dem Software-Management-Programm automatisch neu gesendete Codesignal überschreibt das vorhandene Codesignal auf der Elektronik-Platine und ändert so den Status.
Die GSM / UMTS-Einheit auf der Elektronik-Platine im Code-Schloss schaltet sich bei Stromkontakt automatisch ein und meldet sich an ein erreichbares GSM / UMTS Daten-Netz an und ist somit vollautomatisch betriebsbereit. Die Elektronik-Platine wird über eine Akku-Einheit im Code-Schloss autonom mit Strom versorgt.
- Verschlusseinheit:: Am Code-Schloss wird eine Aufnahme für ein ca. 19 mm Schlossbolzen mit integrierter Ladevorrichtung für einen Akku sein oder eine für das entsprechende Wirtschaftsgut andere nötige Sicherungsmöglichkeit.
Das Gehäuse für das Code-Schloss wird in Form und Aussehen jeweils an das entsprechende Wirtschaftsgut angepasst, jedoch sind die Technischen Komponenten immer gleich
Der Schlossbolzen an der Station (Ladeständer) für Fahrräder oder Pedelecs ist am Ende einer ca. 19 mm dicken und ca. 20 cm langen PVC ummantelten Stahlfeder mit innenliegendem 12 mm dickem PVC
Schlauch für die Kabeldurchführung angebracht. So wird das Wirtschaftsgut fest und sicher mit der Station (Ladeständer) verbunden. Der Schlossbolzen wird im Code-Schloss elektromechanisch mit einem Hubmagneten entriegelt und aus dem Schloss freigegeben. Die Schließzunge im Schloss wird durch eine Stahlfeder permanent geschlossen gehalten.
Im Gebrauch kann ein mobiles Wirtschaftsgut vor Diebstahl durch ein ca. 8 mm Stahlseil von ca. 1 Meter Länge im Ringverfahren gesichert werden und mit dem Benutzercode kann das Code-Schloss wieder geöffnet werden.
- Material:: Aluminium und Hart-PVC, Im Außenbereich sind keine sichtbaren Verschraubungen. Das Material kann je zu sicherndem Wirtschaftsgut unterschiedlich sein.
- Steuereinheit:: Die Steuereinheit ist eine Elektronik-Platine mit Komponenten der GMS/UMTS und GPS Technik mit den entsprechenden Antennen, sowie der Rechner-Hardware und speziell entwickelter Firmware und Software für die Verarbeitung der GSM / UMTS Signale via verschlüsselte SMS Datenübertragung und GPS Signale sowie der Steuerung der elektromechanischen Schlosseinheit. Auf dem Code-Schloss-Gehäuse, wird eine 12 Tasten-Tastatur angeracht, über diese erfolgt die Codeeingabe. Die Kabel der Tastatur werden wasserdicht und unsichtbar in das Gehäuse geführt.
- Montageort:: Die Montage des Code-Schloss am Wirtschaftsgut erfolgt auf einer fest verschraubten Metallplatte. Die Metallplatte bildet den Sockel für das Code-Schloss und wird auf die verschiedenen Wirtschaftsgüter abgestimmt.

## Patentansprüche

1. Ein Elektronisches-Code-Schloss mit Zahlencode-Übermittlung per GSM / UMTS Signal via verschlüsselter SMS-Datenübertragung für die zeitweise Nutzung von Wirtschaftsgütern. (z.B. elektrische Fahrräder usw. die an einer Station / Ladeständer sicher angeschlossen sind)
Durch eine Buchung über ein Internet-Portal mit einem Computer-Software-Management-Programm oder per Telefon kann ein Mieter mit dem ihm und gleichzeitig dem Code-Schloss übermittelten Zahlencode, das Code-Schloss öffnen und das Wirtschaftsgut nutzen.
**dadurch gekennzeichnet,**
**dass** das Elektronische-Code-Schloss mit einer Zahlentastatur und mit einer Elektronik-Platine ausgerüstet ist, die nacheinander beliebig viele verschiedene Öffnungscodes, für das öffnen des Code-Schlosses, durch ein GSM / UMTS Signal via verschlüsselter SMS-Datenübertragung empfangen und verarbeiten kann.

2. Die Elektronik-Platine nach Anspruch 1,
**dadurch gekennzeichnet,**
**dass** die Elektronik-Platine mit Computerelektronik - Hardware und Firmware - sowie mit GSM / UMTS und GPS Einheiten und einer Rechner-Einheit mit Software für die Datensignalverarbeitung der Code- und GPS Signale und einer Steuer-Einheit für die Schloss-Mechanik bestückt ist.

3. Das Computer-Software-Management-Programm mit speziell strukturierter Datenbank nach einem der Vorhergehenden Ansprüche.
**dadurch gekennzeichnet,**
**dass** dieses Computerprogramm, mit der speziell für das Code-Schloss-Verfahren strukturierten Datenbank, die zeitlich begrenzte Buchung eines Mieters über das Internet-Portal, für eine mit dem Code-Schoss versehen Wirtschaftsgut, ermöglicht.
Das Computer-Software-Management-Programm, hat ständig Zugang auf Mobilfunk-Netze und kann somit die Code-Übermittlung automatisch an das Code-Schloss ausführen.
Ein Kunde des Internet-Web-Portals kann somit weltweit ein Wirtschaftsgut, das mit dem Codeschloss gesichert ist, zeitgesteuert buchen und nutzen.

4. Der Aufbewahrungsort der Wirtschaftsgüter nach einem der Vorhergehenden Ansprüche.
**dadurch gekennzeichnet,**
**dass** ein Wirtschaftsgut, das mit dem Code-Schloss ausgerüstet ist, an einem sicheren Aufbewahrungsort abgestellt werden kann, wenn nicht das Code-Schloss schon an einem immobilen Wirtschaftsgut montiert ist.
Für ein mobiles Wirtschaftsgut werden jeweils spezielle Stationen mit geeigneten Ständern bereitgestellt. Dies können auch Stationen sein, die das Wirtschaftsgut mit einer speziellen Verschlusseinheit mit Strom versorgen. Sind in dem Wirtschaftsgut Akkus für die sachgemäße Nutzung vorhanden, werden die Akkus über diese spezielle Verschlusseinheit, an einer Stadion mit Stromanschluss und speziellen Ladeständern, wieder aufgeladen.
